# EUROPEAN PATENT APPLICATION

(11) **EP 1 591 410 A2**
(43) Date of publication of application: **02.11.2005**
(21) Application number: 05005951.8
(22) Date of filing: 18.03.2005
(51) Int. Cl.: B66F 9/07, B65G 1/04

(54) **Telescopic device for handling objects**

(30) Priority: 30.04.2004 IT PR20040003 U
(71) Applicant: Cunico, Vittorio, I-43029 Traversetolo (Parma) (IT)
(72) Inventor: Cunico, Vittorio, I-43029 Traversetolo (Parma) (IT)
(74) Representative: Guareschi, Antonella

(57) **Abstract**

A telescopic device for handling objects comprises a first member (3), or base, associated with a vehicle (2) and an actuator (7), while the other members (4, 6), called sliding members, are free to move, with respect to the base (3), in an objects-positioning direction, said actuator being adapted to handle a first sliding member, which transmits its motion to following sliding members through a worm screw (8) and coupling means (9, 10) engaged thereon.

## Description

Object of the present invention is a telescopic device for handling objects.

Within automatic and non-automatic warehouses, it is known to use devices for placing objects on corridor sides. Such devices, often called bilateral telescopic forks, are associated with vehicles that move inside said corridors, such as for example trolleys or translating and lifting trucks, and are adapted to handle objects whose width is comparable with the vehicle one. These devices comprise several members coupled in a substantially telescopic way; of these members, one, called base, is integral with the vehicle, while the other members, called sliding members, are adapted to slide with respect to the base in a positioning direction and along two senses, in order to be able to partially go out of the base both on its right side and on its left side. This chance of moving along the two senses gives the fork the capability to operate on its two sides, so that the fork has got the "bilateral" name. The sliding movement is normally obtained by applying, to the "base", a plurality of low-friction wheels or sliders that slide on sliding guides obtained on the first sliding member. Obviously, the same result is obtained by inverting the position of guides and wheels. The first sliding member, when going out of the base, must obviously comply with the constraints of a correct mechanism sizing and anyway normally it slightly exceeds half of the base length. The vehicle must be at a certain distance (typically a few centimetres) from the shelves on which the corridor sides in which it moves can be found, due to safety reasons; therefore, the sliding members must be able to move, with respect to the base, at a distance that is longer than the base width. For this reason, said positioning devices comprise at least two sliding members. In this context, the problem arises of transmitting motion to sliding members so that the objects can be placed on both corridor sizes and in the most accurate way possible. Within the prior art, two types of devices can be found.

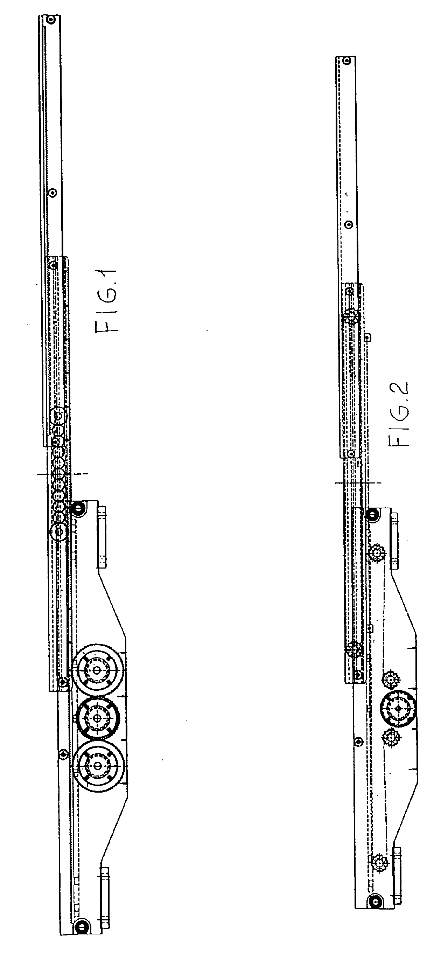

A first type, shown in figure 1, uses as many rack mechanisms as the number of sliding members. In particular, a first rack slides the first sliding member with respect to the base, with which an actuator is associated, a second rack slides the second sliding member with respect to the first one, etc.. A first rack is secured to the base, a second rack to the second sliding member and finally a gear train on the first sliding member that meshes the two previous racks. The rack system offers a good fatigue and wear behaviour, but physiologically has the problem of mechanical clearances due to the number of gears. Manufacturing of gears themselves is complex, since it is necessary to collimate their centre-distance with the rack pitch, so that it is necessary to use modified gears (for example, lowered-teeth gears) and other rather costly arrangements that can be made with difficulty. Moreover, clearances are unavoidably subjected to increase in time, forcing, in automatic systems, to use procedures of automatic clearance adjustment, that provide for the periodic withdrawal of objects from the warehouse and their following centring before reallocating them.

A second type of positioning devices, shown in figure 2, uses a chain or belt ring, preferably of the toothed type to avoid slippages, driven by a toothed wheel integral with a shaft or pin that is centrally assembled onto the base. The kinematism is completed by a series of four idle wheels, even smooth ones, two of which are placed at the base ends and operate as reversal pulleys, and the other two of which arranged near the driving wheel and whose function is guaranteeing the necessary chain or belt take-up.

Obviously, if the sliding member has to project with a length that is slightly greater than half of the base length, it is mandatory that chain or belt are built in such a way as to allow a lateral misalignment to allow overlapping their attachment point onto the first sliding member. Moreover, it is necessary to use a chain that can be wound both on the vertical and on the horizontal plane. Such chain is difficult to manufacture and normally has a rather limited lifetime. Moreover, this type of device is affected by encumbrance problems, that make the adoption of an adequately sized chain difficult, so that undesired breakage and elongations occur, that compel the continuous adjustment of clearances.

Object of the present invention is removing the above-stated inconveniences and providing a telescopic device for handling objects, adapted to be associated with a vehicle that moves inside corridors of a warehouse, that is equipped with optimum wear resistance and, at the same time, allows a very accurate objects positioning. A further object of the present invention is providing a particularly simple and advantageous technical solution from the economic point of view.

Said objects are fully obtained by the device of the present invention, that is characterised by what is included in the below-listed claims and particularly in that it comprises at least one worm screw and coupling means engaged therewith, to transmit motion to sliding members along a positioning direction.

This and other characteristics will be better pointed out by the following description of a preferred embodiment, shown merely as a non-limiting example in the attached tables of drawing, in which:
- figures 1 and 2 show two prior art embodiments;
- figure 3 is a sectional view of the device of the present invention;
- figure 4 shows the device of the present invention in a different section from the one in figure 3;
- figure 5 shows a part of the device, with related section.

With reference to the figures, 1 designates the device of the present invention as a whole. Such device is associated with a vehicle, not shown, in which 2 designates a chassis portion. The device comprises a first member 3, or base, integral with the vehicle and at least two other members, called sliding members, adapted to slide with respect to the base 3 along a positioning direction. A first sliding member 4 is handled with respect to the base 3 preferably, but not necessarily, through a rack mechanism 5, actuated by an actuator 7 associated with the base 3. The motion of the first sliding member 4 is originally propagated to a following sliding member 6 through a worm screw 8 that is integral with the first sliding member 4 and free to rotate. In the embodiment shown in the figures, the screw 8 is substantially of the double-crossed-threaded type, with rightward and leftward threads. The base 3 comprises coupling means 9 that engage with one of said threads, while the second sliding member 6 comprises further coupling means 10 engaged with the other thread. When the first sliding member 4 is handled by the actuator 7, its translation rotates the screw 8, that in turn handles the following sliding member 6. With this mechanism, motion can be propagated to an indefinite number of sliding members. In fact, when there is a third sliding member (not shown), the second sliding member comprises a further screw and further coupling means, etc.

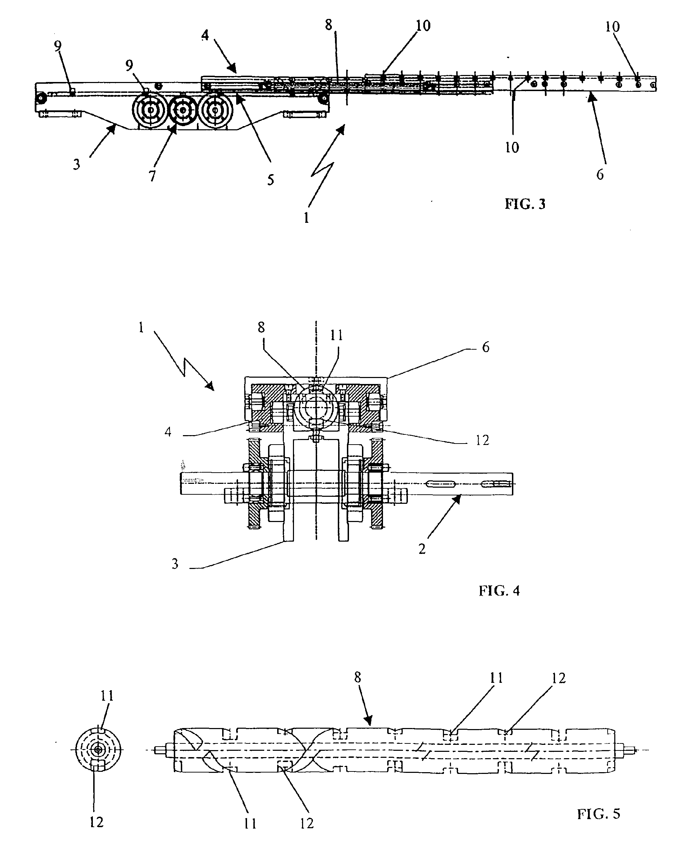

Figure 3 shows a part of the double-crossed-threaded screw 8, in which a first thread has a pair of slots 11, offset by 180°, while the second thread has a slot 12 with greater depth with respect to the slots 11. In such a way, the coupling means engaged with a thread are prevented, during the screw motion, from engaging with the opposite thread. In order to prevent such problem from occurring, the arrangement of pairs of leftward and rightward threads, mutually offset by 90°, with double series of wheels, can be used so that one can be certain that the screw is anyway and always suitably guided. Another possibility is the already described one that provides for a deeper rightward slot and a pair of less deep leftward slots, in order to limit the double wheels to the upper part only, since the wheels secured to the "base", by operating on the deep slot, will be able to rely on a continuous guide. Another possibility could be arranging two parallel screws, synchronised by one or two triads of gears, each one equipped with a single thread respectively engaged with the base or the second sliding member.

Obviously, by adding a following sliding member, it will be possible to insert another screw based on the same functional criteria, thereby obtaining a further double movement.

The example of the screw thread obtained shaped as a slot (shown in figure 3) is merely an indication, since the thread could be projecting and therefore operating on pairs of wheels or scroll crops. The screw pitch depends on the type of chosen coupling, since it is absolutely necessary that this is a reversible coupling, since the screw must receive the base movement along both rotation directions. An ideal coupling occurs with a thread slant equal to 45°, but good results are also obtained for thread slant values included between 20° and 70°, taking into account that with smaller angles, higher accuracies can be obtained with relatively lower dynamic efficiencies.

In a further embodiment, not shown, each sliding member intermediate between base 3 and last sliding member comprises a first screw, of the single-threaded type, with which coupling means are engaged that are integral with the previous member, and a second screw, of the single-threaded type, with which further coupling means are engaged that are integral with the following member, said screws being synchronised by one or two triads of gears.

The device of the present invention, within which motion is transmitted, in an inventive way, from one sliding member to the following one by using a worm screw, allows positioning objects with optimum accuracy and, at the same time, is sturdy and inexpensive.

## Claims

1. Device (1) for handling objects, of the type comprising at least three members, that are substantially telescopically coupled and not necessarily coaxial, said device comprising a first member (3), or base, associated with a vehicle (2) and an actuator (7), while the other members (4, 6), called sliding members, are free to move, related to the base (3) along an objects positioning direction, said actuator being adapted to handle a first sliding member,
**characterised in that** it comprises at least one worm screw (8) and coupling means (9, 10) engaged therewith, for transmitting motion to sliding members along the positioning direction.

2. Device according to claim 1, wherein the sliding members (4) included between base and a last outmost member (6) comprise at least one worm screw (8).

3. Device according to claim 2, wherein at least one sliding member included between base (3) and last member (6) comprises a screw (8) of the double-crossed-threaded type, so that a first thread is engaged with coupling means (9) integral with the previous member, while the second thread is engaged with further coupling means (10) integral with the following member.

4. Device according to claim 3, wherein at least one of the screws of the double-crossed-threaded type comprises threads whose slant is included between 20 and 70 degrees.

5. Device according to claim 3, wherein, in at least one of the screws of the double-crossed-threaded type, at least one of the two threads defines a pair of threads.

6. Device according to claim 3, wherein, in at least one of the screws of the double-crossed-threaded type, the threads related to the two threads are made in the shape of a slot, said slots having different depths.

7. Device according to claim 2, wherein at least one member included between base (3) and last member (6) comprises a first screw, of the single-threaded type, which is engaged with coupling means (9) integral with the previous member, and a second screw, of the single-threaded type, which is engaged with further coupling means (10) integral with the following member.

8. Device according to any one of the previous claims, adapted to handle objects along both senses of the positioning direction.

9. Device according to claim 1, wherein the worm screw (8) comprises a pair of leftward and rightward threads that are mutually offset by 90°.

10. Device according to claim 1, wherein the worm screw (8) comprises a deeper rightward (or respectively leftward) slot and a pair of less deep leftward (or respectively rightward) slots.
